Europäisches Patentamt

European Patent Office

Office européen des brevets

(11) Veröffentlichungsnummer: **0 201 047**
A2

## (12) EUROPÄISCHE PATENTANMELDUNG

(21) Anmeldenummer: 86105982.2

(22) Anmeldetag: 30.04.86

(51) Int. Cl.⁴: **A 01 C 5/06**, A 01 C 7/06

(30) Priorität: 10.05.85 DE 3516857
13.08.85 DE 3528960

(43) Veröffentlichungstag der Anmeldung: 12.11.86
Patentblatt 86/46

(84) Benannte Vertragsstaaten: DE FR IT

(71) Anmelder: Amazonen-Werke H. Dreyer GmbH & Co. KG,
Am Amazonenwerk 9-13, D-4507 Hasbergen-Gaste (DE)

(72) Erfinder: Dreyer, Heinz, Dipl.-Ing. Univ. Dr., Am
Amazonenwerk 7, D-4507 Hasbergen (DE)
Erfinder: Wiemeyer, Benno, Im Sande 6,
D-4531 Lotte-Halen (DE)

(54) **Drillmaschine.**

(57) Drillmaschine, die einen Rahmen (3), Vorratsbehälter, Säschare (1) mit zumindest zwei Ein- und Ausläufen (15/19) für zwei verschiedene Materialien und jeweils hinter den Säscharen angeordnete Tiefenführungs- bzw. Druckrollen (7) aufweist. Die hinter dem Säschar angeordnete Rolle (7) weist auf ihrem Umfang in Abständen jeweils zueinander angeordnete Druckelemente (23) auf, wobei sich zwischen den Druckelementen (23) jeweils ein Freiraum (24) befindet. Die Druckrolle (7) kann Druckelemente (23) aufweisen, die in ihrem Außenbereich eine hufeisenförmige Querschnittsform aufweist. Weiterhin ist die Druckrolle (7) gegenüber dem Säschar (1) seitlich gegen eine Federkraft ausweichbar angeordnet. Außerdem ist in dem Säschar (1) eine Leitvorrichtung zum Umstellen der Saatgut- bzw. Düngemittelzufuhr zu den Ausläufen (15/19) des Säschares angeordnet. Schließlich ist in dem Bereich des hinteren Auslaufes (19) des jeweiligen Säschares (1) jeweils ein nach unten in die Säfurche ragendes und abnehmbar an dem Säschar angeordnetes Verlängerungsstück des hinteren Auslaufes (19) vorgesehen, wobei das untere Ende des Verlängerungsstückes zumindest teilweise die Seitenwand des Schargehäuses bzw. den Aufreißkörper einseitig seitlich überragt.

0201047

Amazonen-Werke

H. Dreyer GmbH & Co. KG

Am Amazonenwerk 9 - 13

4507 Hasbergen-Gaste

ANR 1 000 667

## Drillmaschine

Die Erfindung betrifft eine Drillmaschine gemäß des Oberbegriffes der Ansprüche 1 bis 4.

Eine derartige Drillmaschine ist bereits durch die DE-PS 31 22 717 bzw. 32 16 376 bekannt. Die Druckrollen bei diesen Drillmaschine weisen eine geschlossene Umfangs- bzw. Lauffläche auf. Nachteilig ist bei diesen Druckrolen, daß sehr schnell Boden auf den Laufflächen haften bleibt und einen geschlossenen Erdring bildet. Der Druchmesser nimmt sehr schnell zu. Hierdurch können die Rollen den Boden nur noch sehr schlecht andrücken. Teilweise bleiben die Rollen stehen und wühlen den Boden auf. Diese Nachteile sind auch nicht durch an dem Säschar angeordnete Abstreifer zu beseitigen, die den an den Rollen anhaftenden Boden abstreifen sollen. In manchen Fällen wirkt sich dieser Abstreifer sogar nachteilig aus, da er dazu beiträgt, daß die Rolle stehenbleibt bzw. blockiert.

Der Erfindung liegt die Aufgabe zugrunde, eine Rolle zu schaffen, bei der die vorgeschriebenen Nachteile nicht auftreten und gleichzeitig ohne Gefahr der nachteiligen Anhaftung von Boden an der Rolle ein gutes Abrollen und eine gute Abdrückwirkung der Rolle erreicht wird.

Diese Aufgabe wird erfindungsgemäß durch das Kennzeichen der Ansprüche 1 bis 4 gelöst.

Infolge dieser Maßnahme kann sich kein durchgehender Erdring auf der Lauffläche der Rolle bilden, vielmehr bröckelt der anhaftende Boden von den Druckelementen ab, wenn die Rolle auf dem Boden abrollt, so daß kein Abstreifer benötigt wird, um anhaftende Erde abzustreifen. Weiterhin drückt die Rolle stufenweise den Boden an und das Andrücken des Bodens in der Säfurche wird nicht unterbrochen, da die Rolle sich bei allen Einsatzbedingungen dreht. Dieses stufenweise Andrücken des Bodens in der Säfurche wirkt sich vor allem auf schwerem Boden vorteilhaft aus, da zwischen den Andruckstreifen der Boden nicht so fest angedrückt wird, so daß Wasser in der Säfurche in den Boden eindringen kann. Des weiteren hinterläßt die erfindungsgemäße Rolle eine feinkrümelige Bodenoberfläche im Bereich der Säfurche, was sich ebenfalls sehr vorteilhaft auswirkt. Sehr große Vorteile hat diese Rolle bei der Anwendung des Zero-tillage-Verfahren.

In einer Ausführungsform ist vorgesehen, daß die Druckelemente als auf einem Tragring der Rolle angeordnete schmale Druckbleche ausgebildet sind. Hierdurch wird erreicht, daß der Boden in schmalen Abständen hintereinander in Fahrtrichtung liegenden Streifen angedrückt wird. Hierbei sind die Druckbleche so angeordnet, daß ihre Längsseite quer zur Fahrtrichtung weist.

In einer anderen Ausführungsform ist vorgesehen, daß die Druckelemente als eine Spirale ausgebildet ist, die um den runden Tragrind der Rolle gelegt ist. Hierdurch wird eine sehr einfache Ausführungsform der Erfindung erreicht. Hierbei kann die Spirale endlos um den Tragring der Rolle gewickelt sein.

3

Es wird darauf hingewiesen, daß für die Gegenstände der nur fakulativ auf den Anspruch 1 zurückbezogenen Ansprüche 12,24 und 30 selbständiger Schutz beansprucht wird, da diese Gegenstände vorteilhafte Ausbildungen der Drillmaschinen betreffen.

Um ein Verstopfen der Freiräume zwischen den Druckelementen sicher zu verhindern, ist erfindungsgemäß vorgesehen, daß die Druckelemente in ihrem Außenbereich eine hufeisenförmige Form aufweisen. Infolge dieser Maßnahmen wird die Arbeitsweise der Druckrolle wesentlich verbessert, vor allem wird ein Verstopfen der Freiräume auch auf klebrigen und schweren Böden vermieden, so daß in vorteilhafter Weise der Boden in der Säfurche oberhalb des Saatgutes angedrückt werden kann.

Eine selbstreinigende Wirkung der Rolle wird dadurch erreicht, daß die seitlichen Außenflächen sehr steil von außen nach innen auf die Drehachse zulaufen. Hierdurch ergibt sich der Effekt, daß die während des Einsatzes der Drillmaschine durch die Drehung der Druckrolle hervorgerufenen Radialkräfte die sich evtl. innerhalb der Freiräume sich ansetzen wollenden Bodenteile nach außen geschleudert wird. Es ergibt sich also eine selbstreinigende Wirkung der erfindungsgemäßen Rolle. Eine besonders einfache Ausbildung der Druckrolle wird erfindungsgemäß dadurch erreicht, daß die einzelnen Druckelemente von hufeisen- bzw- U-förmig gebogenen Rundstäben gebildet werden.

Um das Andrücken des Bodens in der Säfurche auch bei Kurvenfahrten sicherzustellen und gleichzeitig eine Steinsicherung für die Druckrolle zu schaffen, ist erfindungsgemäß vorgesehen, daß die Druckrolle gegenüber dem Säschar seitlich gegen eine Federkraft ausweichbar angeordnet ist. Infolge dieser Maßnahmen kann die Druckrolle in jedem Falle der von dem Säschar geschaffenen Säfurche folgen, und so den Boden innerhalb der Säfurche andrücken. Weiterhin kann die Druckrolle gegenüber dem Säschar seitlich ausweichen, wenn seitliche Kräfte auf die Druckrolle einwirken, wenn beispielsweise das Säschar bzw. die Druckrolle seitlich bzw. schräg seitlich auf dem Boden festsitzende Hindernisse auftreffen In einer bevorzugten Ausführungsform ist vorgesehen, daß der Haltearm der Druckrolle gegen die Federkraft seitlich ausweichbar angeordnet ist. Infolge dieser Maßnahme kann die robuste Lagerung der Druckrolle an dem Haltearm beibehalten werden, während der Haltearm an dem Säschar seitlich ausweichbar angeordnet ist. In einer bevorzugten Maßnahme ist hierbei vorgesehen, daß der Haltarm an seiner Oberseite zur Befestigung an dem Säschar einen etwa rechtwinklig abgewinkelten Befestigungsteil aufweist und daß in dem Bereich der Befestigungsstelle zumindest eine Feder angeordnet ist, die den Haltearm in die Normalposition drückt bzw. hält. Hierdurch kann die Feder an einer geschützten Stelle an dem Säschar angeordnet werden.

Schließlich sieht die Erfindung noch vor, um die Leiteinrichtung vor allem in ihrer Herstellung zu vereinfachen, daß die Leitvorrichtung als die Enden der Zuleitungsschläuche ausgebildet sind, die über eine Einstellvorrichtung hin- und herbewegbar sind und in zumindest zwei Positionen einstellbar sind. Hierdurch wird eine überraschend einfache Ausbildung der umstellbaren Leiteinrichtungen geschaffen.

Um die Verstopfungsgefahr, vor allem des vorderen Auslaufes wesentlich zu verringern, ist erfindungsgemäß vorgesehen, daß in dem Bereich des hinteren Auslaufes des jeweiligen Säschares jeweils ein nach unten in die Säfurche ragendes und abnehmbar an dem Säschar angeordnetes Verlängerungsstück des hinteren Auslaufes vorgesehen ist, und daß das untere Ende des Verlängerungsstückes zumindest teilweise die Seitenwand des Säschares nur einseitig seitlich überragt. Infolge dieser Maßnahme wird vor allem auf klebrigen und schweren Böden ein Verstopfen des vorderen Auslaufes vermieden, da sich der hintere Auslauf seitlich des vorderen Auslaufes befindet. Weiterhin befindet sich das einseitig seitlich über das Schargehäuse nach außen ragende Verlängerungsstück des hinteren Auslaufes noch im wesentlichen in dem natürlichen Aufriß des Bodens, der beim Reißen der Säfurche durch das Säschar entsteht. Das Verlängerungsstück des hinteren Auslaufes schneidet nur leicht seitlich in den festen Boden ein. Außerdem arbeitet das seitlich neben dem Schargehäuse angeordnete Verlängerungsstück es hinteren Auslaufes in einem von der Scharspitze vom Stroh und sonstigen auf der Bodenoberfläche liegenden Ernterückständen freigeräumten Bereich. Somit kann es zu keinen Verstopfungen kommen und auch nicht zu einem Mitreißen von auf der Bodenoberfläche liegendem Stroh durch das seitlich sich neben dem Schargehäuse befindende Verlängerungsstück des hinteren Auslaufes.

In einer bevorzugten Ausführungsform ist erfindungsgemäß vorgesehen, daß das Verlängerungsstück schräg nach außen gerichtet ist und mit seiner äußeren schrägen Seitenwand das Schargehäuse seitlich überragt. Hierdurch wird ein im oberen Bereich des Schargehäuses sehr schmal bauendes Säschar, auch im Bereich des hinteren Auslaufes geschaffen, wobei erst im unteren Bereich, in dem das Verlängerungsstück unmittelbar ausmündet, das Schargehäuse einseitig verbreitert wird.

Damit auch unter schwierigsten Einsatzverhältnissen sichergestellt ist, daß der hintere Auslauf sich nicht verstopft, ist erfindungsgemäß vorgesehen, daß die äußere schräge Seitenwand des Verlängerungsstückes zumindest etwa in einem Abstand zu der Unterseite des Verlängerungsstückes endet, der zumindest einem Drittel der Länge des Verlängerungsstückes entspricht.

Um auch noch unter schwierigsten Einsatzbedingungen beim Zero-tillage-Verfahren die Drillmaschine einsetzen zu können, ist erfindungsgemäß vorgesehen, daß das Verlängerungsstück mittels eines Schnellverschlusses an dem jeweiligen Schar zu befestigen ist. Hierdurch ist es dann in einfachster Weise möglich, daß bei schwierigsten Einsatzbedingungen das Verlängerungsstück von dem Schar in sehr kurzer Zeit abgenommen werden kann.

Hierbei ist in vorteilhafter Weise vorgesehen, daß der Schnellverschluß als Schnappverschluß ausgebildet ist, daß der Betätigungshebel des Schnappverschlusses der untere hintere Teil des Schargehäuses ist. Hierdurch wird erreicht, daß einerseits sich ein sehr schnelles Einsetzen und Herausnehmen des Verlängerungsstückes ergibt und weiterhin ist der Schnappverschluß bzw. der Betätigungshebel in das Schargehäuse direkt integriert. Hierdurch ergibt sich eine äußerst kompakte Bauweise, so daß das erfindungsgemäße Säschar sehr kurz gebaut.

Hierbei soll mit in die Erfindung eingeschlossen sein, daß das Verlängerungsstück auch so an dem Schargehäuse angeordnet ist, daß das Verlängerungsstück zur Seite oder nach oben weggeklappt werden kann. Nach der Abnahme bzw. dem Wegklappen des Verlängerungsstückes hat der hintere Auslauf keine Bodenberührung mehr. Dieses ist bei dem Einsatz der Drillmaschine auf schwerden klebrigen Böden von großer Bedeutung. durch die abnehmbare Anordnung des Verlängerungsstückes erhält man sehr große Variationsmöglicheiten für die ausgestaltung der Ausläufe des Säschares. Es können somit sehr leicht verschiedenartig ausgebildete Verlängerungsstücke an dem Säschar angeordnet werden. Außerdem können die Verbindungsstückes sehr leicht ersetzt sowie geschärft bzw. repariert sowie gereinigt werden.

Weitere Einzelheiten der Erfindung sind den übrigen Unteransprüchen sowie der Beispielsbeschreibung und den Zeichnungen zu entnehmen. Hierbei zeigen

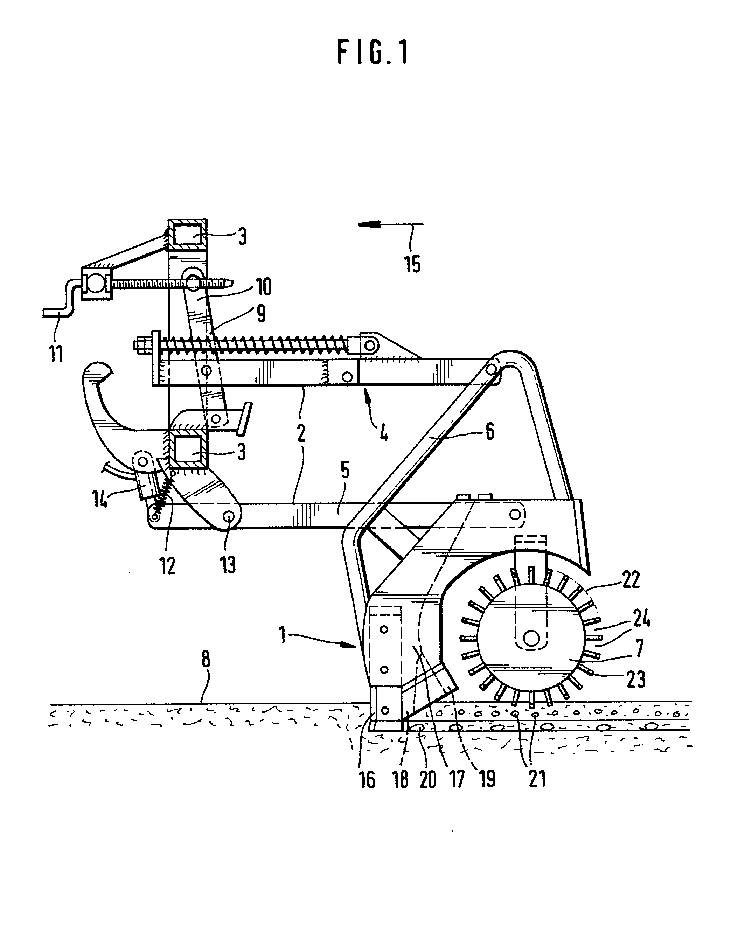

Fig. 1 ein an der Drillmaschine angeordnetes Säschar mit erfindungsgemäß ausgebildeter Rolle in der Seitenansicht,

Fig. 2 die erfindungsgemäße Druckrolle in der Seitenansicht und in vergrößerter Darstellung,

Fig. 3 die Rolle gemäß Fig. 2 in der Ansicht III,

Fig. 4 eine anders ausgebildete Rolle in der Seitenansicht und in Prinzipdarstellung,

Fig. 5 eine weitere erfindungsgemäß ausgebildete Rolle in der Seitenansicht und in Prinzipdarstellung,

Fig. 6 die Rolle gemäß Fig. 5 in der Ansicht VI,

Fig. 7 ein an einer Drillmaschine angeordnetes Säschar mit der erfindungsgemäß ausgebildeten Rolle in der Seitenansicht,

Fig. 8 die erfindungsgemäße Druckrolle in der Seitenansicht und in vergrößerter Darstellung,

Fig. 9 die Rolle in der Seitenansicht und im Schnitt,

Fig. 10 eine weitere Drillmaschine mit einem an der Drillmaschine angeordneten Säschar in erfindungsgemäßer Ausführung in der Seitenansicht,

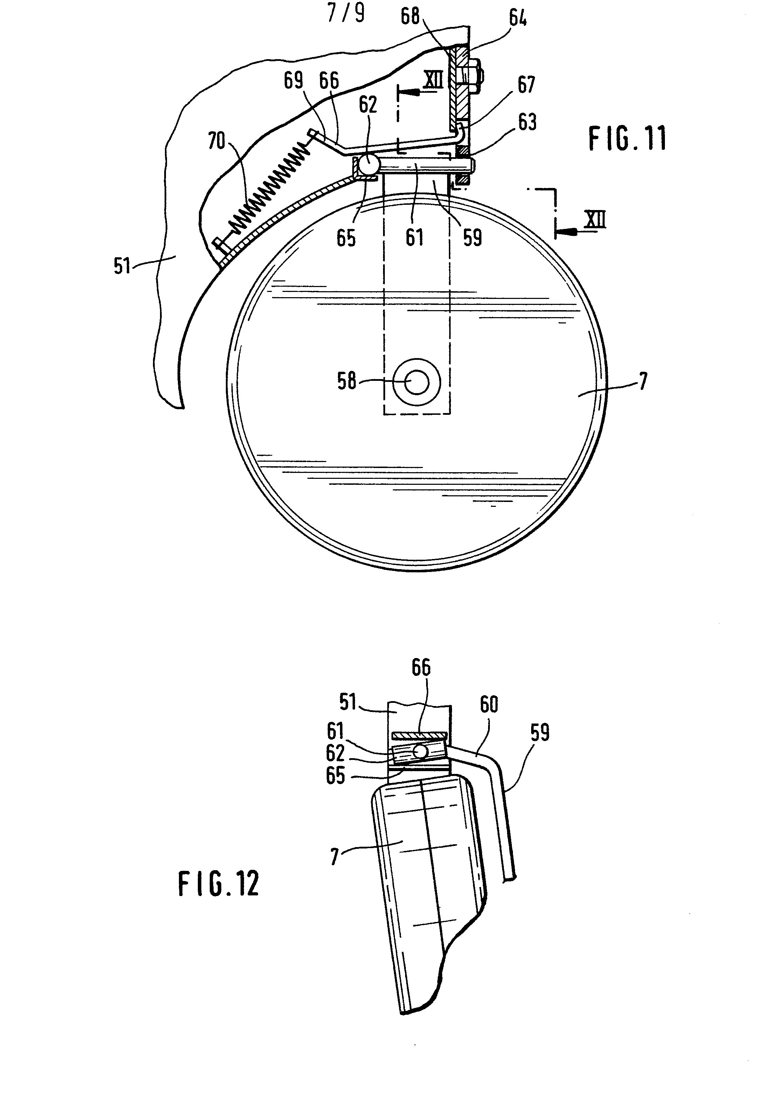

Fig. 11 die erfindungsgemäße seitlich federnd ausweichbare Anordnung der Druckrolle an einem Säschar in der Seitenansicht und im Teilschnitt,

Fig. 12 die Anordnung der Rolle gemäß Fig. 11 in der Ansicht XI - XI,

Fig. 13 die erfindungsgemäße Anordnung der Leiteinrichtungen an dem Säschar gemäß Fig. 16 im Teilausschnitt und in der Ansicht XIII - XIII,

Fig. 14 die Leiteinrichtungen gemäß Fig. 13 in der Ansicht XIV - XIV,

Fig. 15 den unteren Teil eines erfindungsgemäß ausgebildeten Säscharen mit einem Verlängerungsstück für den hinteren Auslauf in der Seitenansicht,

Fig. 16 das Säschar gemäß Fig. 15 in der Ansicht XVI - XVI und

Fig. 17 ein anders ausgebildetes Verlängerungsstück für den hinteren Auslauf des Säschares gemäß Fig. 15 in gleicher Darstellungsweise wie Fig. 16.

Die Säschare 1 sind über die parallelogrammartigen Halterungen 2 in aufrechter Ebene bewegbar an dem Rahmen 3 der Drillmaschine angeordnet. Die Drillmaschine weist ein nicht dargestelltes Fahrgestell und ebenfalls nicht dargestellte Vorratsebehälter auf. Die parallelogrammartige Halterung 2 weist die obere Strebe 4 und die untere Strebe 5 auf, die jeweils an ihrem vorderen Ende an dem Rahmen 3 angelenkt sind und auf ihrer rückwärtigen Seite den Scharhalter 6 des Schares 1 tragen. Hinter dem Säschar 1 ist die Tiefenführungs- bzw. Druckrolle 7 angeordnet. Diese Rolle 7 bestimmt die Eindringtiefe des Säschares 1 in den Boden 8. Die parallelogrammartige Halterung 2 ist weiterhin an die zentrale Einstellvorrichtung 9 angeschlossen, über die die Eindringtiefe der Säschare 1 in den Boden 8 einzustellen ist. Hierzu ist die obere Strebe 4 an dem Schwenkhebel 10 angeordnet, der mittels der Spindel 11 zu verschwenken ist. Durch Verschwenken des Schwenkhebels 10 wird die obere Strebe 4 und somit der Scharhalter 6 verschwenkt. Hierdurch ändert sich die Lage der Rolle 7 in bezug auf das Säschar 1, so daß unterschiedliche Eindringtiefen für das Säschar einzustellen sind.

Bei normalen Einsatzverhältnissen reicht das Eigengewicht des Säschares 1 aus, um in den Boden 8 eindringen zu können. Vor allem auf steinigen Böden hat es sich jedoch als zweckmäßig erwiesen, an der vorderen Strebe 5 eine Zugfeder 12 anzuordnen, die eine zusätzliche Kraft auf das Säschar 1 in Richtung auf den Boden 8 ausübt. An dem über das vordere Gelenk 13 der unteren Strebe 5 hinausragenden Stück ist der Hubzylinder 14 angeordnet. Mit diesem Hubzylinder 14 werden die Säschare 1 aus dem Boden gehoben und in eine Transportstellung gebracht.

Auf der der Fahrtrichtung 15 zugewandten Seite des Säschares 1 ist die Scharspitze 16 angeordnet. Innerhalb des Scharkörpers 17 des Säschares 1 sind die zwei voneinander getrennten Führungen für Saatgut und Düngemittel angeordnet. Der vordere Auslauf 18 und der hintere Auslauf 19 weisen in Fahrtrichtung 15 gesehen einen Abstand zueinander auf. Der vordere Auslauf 18, der für das Saatgut 20 vorgesehen ist, ist direkt hinter die Scharspitze 16 gerichtet, und der hintere Auslauf 19, der für Düngemittel 21 vorgesehen ist, ist weiter nach hinten gerichtet, so daß das Saatgut 18 und die Düngemittel 21 getrennt voneinander abgelegt werden.

Die hinter dem Säschar 1 angeordnete Rolle 7 weist auf ihrem Umfang 22 die in Abständen jeweils zueinander angeordneten Druckelemente 23 auf, wobei sich zwischen den Druckelementen 23 jeweils der Freiraum 24 befindet. Die Druckelemente 23 sind als Druckbleche 25 ausgebildet und auf dem Tragrind 26 der Rolle 7 mittels einer Schweißnaht befestigt. Die Druckbleche 25 sind schmal ausgebildet un so angeordnet, daß ihre Längsseite quer zur Fahrtrichtung 15 weist. Die Druckelemente 25 weisen einen ähnlichen Querschnitt wie die Säfurche auf.

Die Druckbleche 25 der Rolle 7 drücken den Boden in der von dem Säschare geschaffenen Säfurche, in dem Saatgut 20 und Düngemittel 21 abgelegt sind, an. Hierbei folgt jeweils eine verfestigte Zone, die durch die Druckbleche 25 in den Boden gedrückt wird, eine etwas lockere Zone, die von den Freiräumen 24 herrühren, den Boden an. Wenn die Druckbleche 25 sich aus dem Boden herausbewegen, bewegen sie sich nach oben an den Säfurchenwänden nach oben und lockern den Boden etwas, so daß nach etwas feinkrümlige Erde auf den angedrückten Boden die durch das Andrücken der Druckbleche in Abständen bereits sich auf der Oberfläche befindlichen lockerem Boden zusätzlicher lockerer Boden hinzu.

Dadruch, daß die Druckbleche in einem hintereinander angeordnet sind und sich so ein Freiraum 24 zwischen den Druckblechen 25 befindet, kann sich auf der Umfangsfläche 25 der Rolle 7 kein durchgehender Erdring bilden, sondern vielmehr fällt die anhaftende Erde von den Druckblechen 25 ab, so daß auf einen Abstreifer verzichtet werden kann.

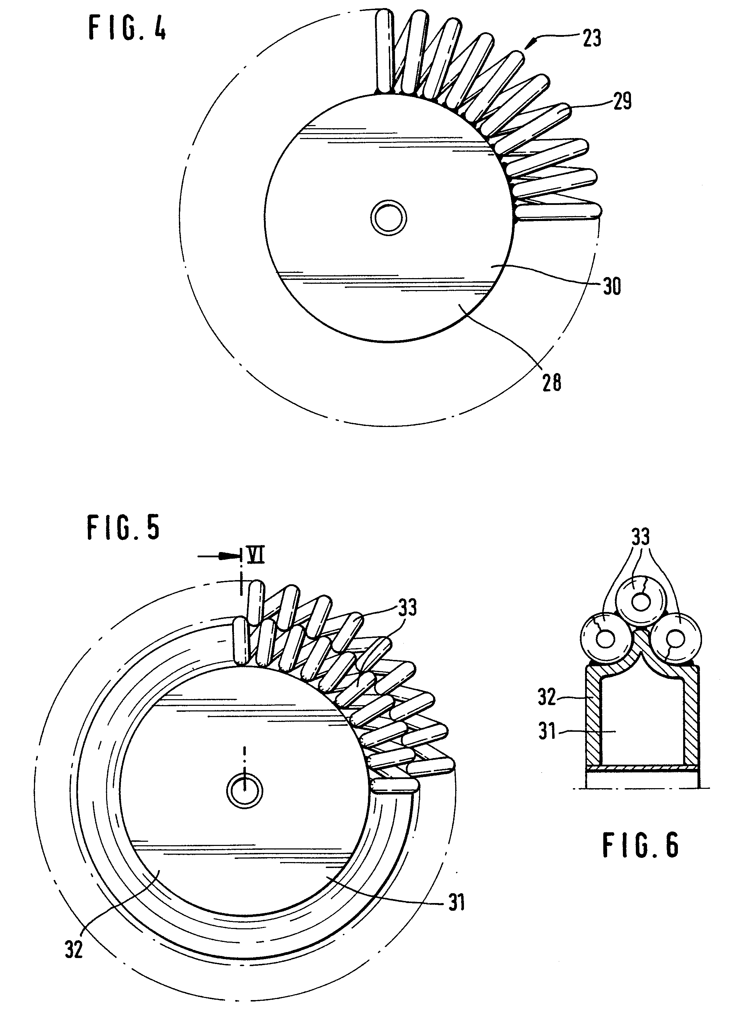

Die Rolle 28 gemäß Fig. 4 weist als Druckelemente 23 eine Spirale 29 auf, die um den runden Tragrind 30 der Rolle 28 gelegt ist. Die Spirale 29 ist endlos um die Umfangsfläche des Tragringes 30 der Rolle 28 gewickelt. Die auf dem Tragrind 30 aufliegenden Teile der Spirale 29 sind mittels einer Schweißnaht befestigt.

Auch diese Roll 28 drückt den Boden in der Säfurche in in Fahrtrichtung gesehen hintereinanderliegenden Streifen an und hinterläßt eine feinkrümlige Oberfläche.

Die Druckrolle 31 weist den Tragring 32 auf. Auf der Umfangsfläche des Tragringes 32 sind die drei Spiralen 33 dreieckförmig mittels einer Schweißnaht befestigt. Hierdurch wird eine Anpassung der Form der Rolle 31 an die Form der Säfruche erreicht. Auch mit dieser Druckrolle werden die gleichen Vorteile wie vor beschrieben erzielt.

Mit in die Erfindung sollen Ausführungsformen mit unterschiedlichsten Formen von Druckelementen eingeschlossen sein. Ebenfalls sind ovale oder andere Formen von Spiralen in der Querschnittsform denkbar. So daß auch mit einer Spirale man sich an verschiedene Säfurchenformen anpassen kann.

Entscheidend ist bei der Erfindung, daß man eine unterbrochene Umfangsfläche der Druckrolle erreicht, so daß sich kein ununterbrochener Erdring auf der Umfangsfläche der Rolle bilden kann. Durch die Freiräume zwischen den einzelnen Druckelementen wird eine selbstreinigende Wirkung der Rolle erzielen, wobei gleichzeitig noch zusätzlich ein sehr vorteilhaftes Andrücken des Bodens in der Säfurche vor allem auf schwerden Böden erreicht wird, so daß Regenwasser in den Boden der Säfurche zwischen den angedrückten Streifen durch den etwas lockeren Boden nach unten sickern kann. Außerdem wird noch eine gute griffige Wirkung durch die erfindungsgemäß angeordneten Druckelemente der Rolle erreicht.

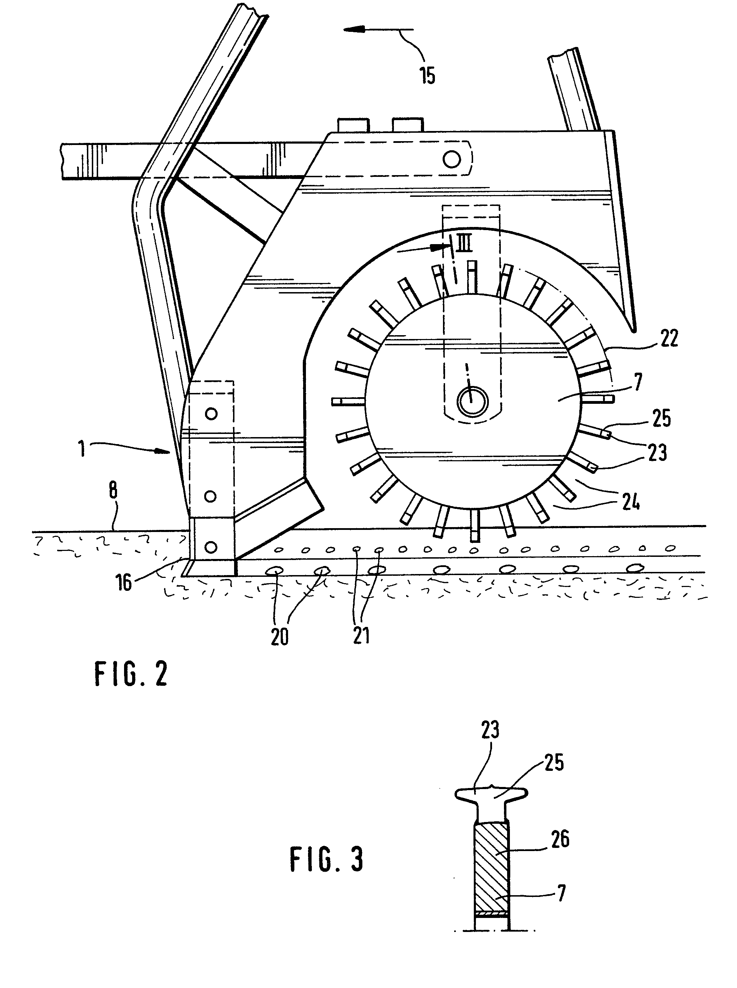

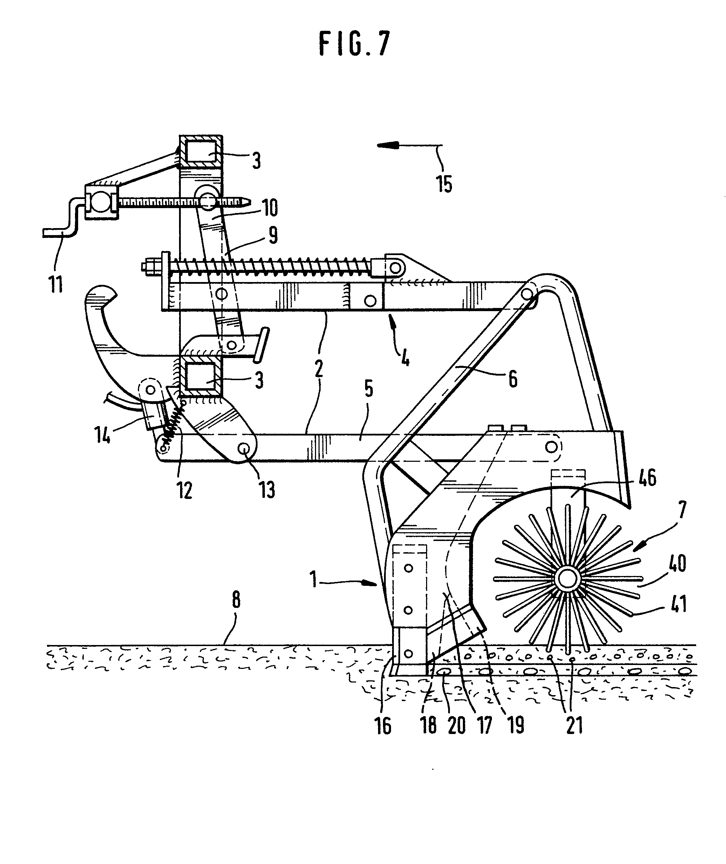

Die hinter dem Säschar 1 gemäß Fig. 7 angeordnete Rolle 7 weist auf ihrem Umfang 40 die in Abständen zueinander angeordneten Druckelemente 41 auf, wobei sich zwischen den Druckelementen 41 jeweils der Freiraum 42 befindet. Diese Druckelemente 41 weisen im Querschnitt gesehen in ihrem Außenbereich eine hufeisenförimige Form auf, wie dieses besonders gut in Fig. 3 zu erkennen ist. Die einzelnen Druckelemente 41 sind als hufeisen- bzw. U-förmig gebogene Rundstäbe 43 ausgebildet. Die Rundstäbe 43 sind auf der Hülse 44 angeschweißt, die auf der Welle 45 drehbar gelagert ist. Die Welle 45 ist an dem Haltearm 46 angeordnet, der wiederum an dem Säschar 1 befestigt ist.

Die seitlichen Außenflächen 47 verlaufen sehr steil von außen nach innen auf die durch die Welle 45 verlaufenden Drehachse zu, so daß die seitlichen Außenflächen 47 fast parallel zueinander verlaufen. Durch diese fast annähernd parallel zueinander verlaufenden Außenflächen 47 der Druckelemente 41 wirken auf die sich evtl. an den Rundstäben 43 festsetzenden Bodenteile relativ große radiale Kräfte ein, so daß diese Bodenteile von den Rundstäben abfallen. Somit setzen sich die Zwischenräume 42 zwischen den einzelnen Rundstäben 43 bzw. der von den Rundstäben 42 eingeschlossene Raum 48 nicht zu.

Die Druckelemente 41 der Rolle 7 drücken den Boden in der von dem Säschar 1 geschaffenen Säfurche, in der Saatgut 20 und Düngemittel 21 abgelegt sind, an. Hierbei folgt jeweils einer verfestigten Zone, die durch die Druckelemente 41 in den Boden gedrückt wird, eine etwas lockere Zone, die jewei son den Freiräumen 40 herrühren.

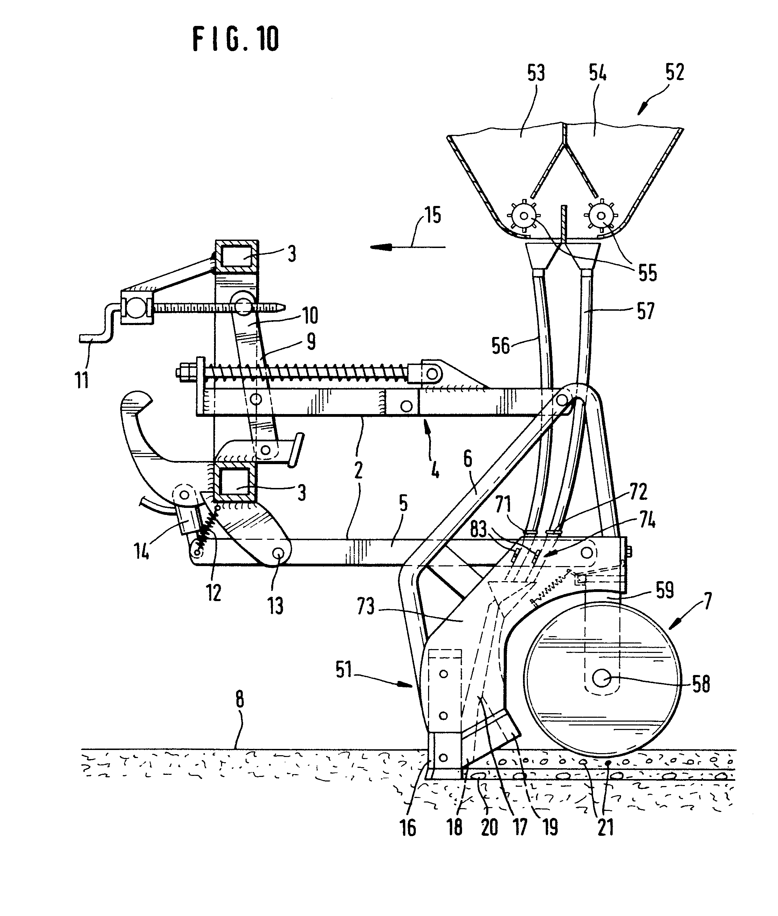

Die Säschare 51 gemäß Fig. 10 sind in gleicher Weise wie die vorher beschriebenen Säschare über die parallelogrammartigen Halterungen 2 in aufrechter Ebene bewegbar an dem Rahmen 3 der Drillmaschine entsprechend

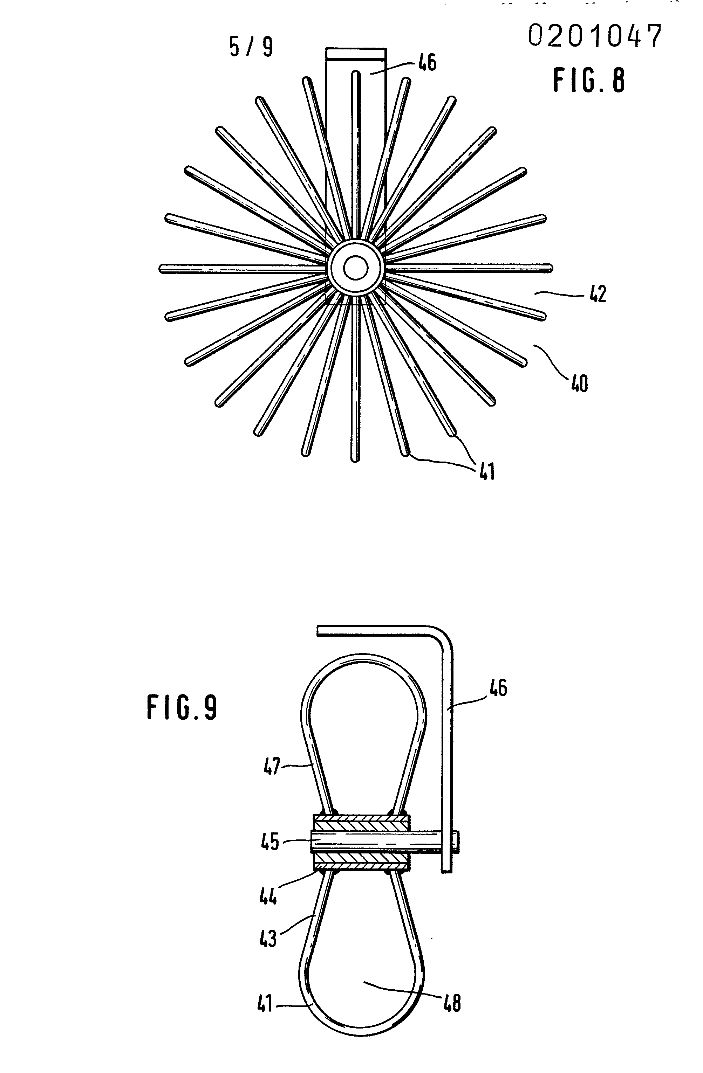

Fig. 8 angeordnet. Die Drillmaschine gemäß Fig. 10 weist die Vorratsbehältereinheit 52, die schematisch dargestellt ist, auf. Diese Vorratsbehältereinheit 52 besteht aus dem Vorratsbehälter 53 für Saatgut und dem Vorratsbehälter 54 für Düngemittel. Aus den Vorratsbehältern 53 und 54 werden das Saatgut bzw. das Düngemittel über die schematisch dargestellten Dosiereinrichtungen 55 und über die Zuleitungsschläuche 56 und 57 den getrennten Ausläufen 18 und 19 des jeweiligen Säschares 51 zugeleitet.

Die hinter dem Säschar 51 angeordnete Druckrolle 7, ist auf der Welle 58 drehbar gelagert. Die Welle 58 ist an dem Haltearm 59 angeschweißt. Der Haltarm 59 weist an seiner Oberseite zur Befestigung an dem Säschar 51 den etwa rechtwinklig abgewinkelten Befestigungsteil 60 auf. Der Befestigungsteil 60 ist T-förmig ausgebildet. Der Befestigungsteil 60 weist einen Mittelsteg 61, der in seinem Befestigungsbereich an dem Säschar 51 rund ausgebildet ist. Dieses Teil des Mittelsteges besteht aus einem Rundstab, der an dem Befestigungsteil 60 angeschweißt ist, auf Weiterhin ist an dem Mittelsteg 61 der obere Steg 62 des T-förmigen Teiles angeschweißt. Der hintere Teil des Mittelsteges 61 faßt in die Lagerbuchse 63 des Sicherungsstückes 64, welches an dem Säschar 51 angeschraubt ist. Der obere Steg 62 liegt an den Innenflächen der in dem Säschar 51 angeordneten Winkelschiene 65 an. Diese Schiene 65 bildet die Auflageflächen für den oberen Steg 62 des Befestigungsteiles 60. Weiterhin ist in dem Säschar 51 oberhalb des Befestigungsteiles 60 die Platte 66 angeordnet. Die Platte 66 weist auf ihrer Hinterseite die Abkantung 67 auf, mit der sie hinter die Rückwand 68 des Säschares 51 fast. An der anderen Seite 69 dieser Platte 66 ist die Zugfeder 77 befestigt, die auf ihrer anderen Seite an dem Säschar 51 ebenfalls befestigt ist. Diese Feder 70 zieht die Platte 66 gegen den oberen Steg 62 des Befestigungsteiles 60.

Durch die T-förmige Ausbildung des Befestigungsstückes 60 weist das Befestigungsteil 60 dreipunktförmig angeordnete Anlageflächen auf. Durch die Platte 66 wird der obere Steg 62 normalerweise, wenn keine seitlichen Kräfte auf die Druckrolle 7 einwirken, in die Anlageflächen der Winkelschiene 65 gezogen. In dieser Position ist die Rolle 7 genau mittig hinter dem Säschar 51 angeordnet. Somit zieht also die Feder 70 den Haltearm 59 und somit auch die Druckrolle 7 in die Normalposition.

Wenn nun eine seitliche Kraft auf die Druckrolle 7 einwirkt, wie dieses beispielsweise bei Kurvenfahrten der Fall ist, wenn die Rolle 7 der von dem Säschar 51 geschaffenen Säfurche folgt, kann die Druckrolle 7, wie dies in Fig. 6 dargestellt ist, gegen die Kraft der Zugfeder 7 seitlich ausweichen. In diesem Falle drückt der Befestigungssteg 61 die Platte 66 gegen die Kraft der Feder 70 nach oben. Über die Platte 66 drückt die Feder 70 den Steg 61 wieder in seine Normalsposition zurück, wenn die Säfurche im Bereich der Rolle 7 sich wieder genau hinter dem Säschar 51 befindet.

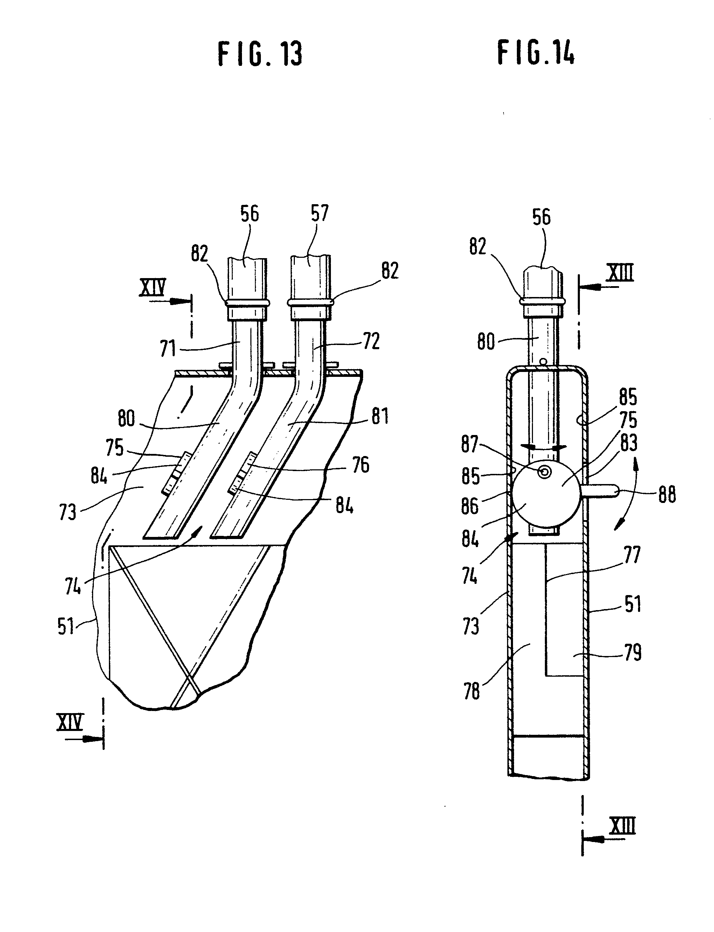

Das Säschar 51 gemäß den Fig. 10, 13, und 14 weist die getrennten Einläufe 71 und 72 auf. Unterhalb der Einläufe 71 und 72 sind innerhalb des Scharkörpers 73 die Leitvorrichtungen 74 angeordnet, so daß sie sich zwischen der Vorratsbehältereinheit 52 und den Ausläufen 18 und 19 des Säschares 51 befinden. Die Leitvorrichtungen 74 sind als die Enden der Zuleitungsschläuche 56 und 57 ausgebildet, die über die Einstellvorrichtungen 75 und 76 hin- und herbewegbar und in zumindest zwei Positionen einstellbar sind.

In dem Scharkörper 73 ist unterhalb der Leitvorrichtungen 74 zwischen den Einläufen 71 und 72 und den Ausläufen 18 und 19 die aufrecht verlaufende Trennwand 77 angeordnet. Die Oberseite dieser Trennwand 77 fluchtet mit der die Mittelpunkte der Einläufe 71 und 72 verbindenden Linie. Durch diese Trennwand 77 werden unterhalb der Leitvorrichtungen 74 die zwei getrennten Zuführungsschäche 78 und 79 geschaffen. Hierbei ist der Zuführungsschacht 78 mit dem vorderen Auslauf und der Zuführungsschacht 79 mit dem hinteren Auslauf verbunden. Somit kann also das Gut über die Leitvorrichtungen 74 entweder dem Auslauf 18 oder dem Auslauf 19 in gewünschter Weise zugeleitet werden.

Die Enden der Zuleitungsschläuche 51 und 57 sind als die Rohre 80 und 81 ausgebildet. Hierzu sind die Zuleitungsschläuche 56 und 57 auf die oberen Enden der Rchre 80 und 81 aufgesteckt und mit einer Schlauchschelle 82 jeweils befestigt. In dem Schargehäuse 73 sind zwei längliche Öffnungen 83 vorgesehen. An den Rohren 80 und 81 sind jeweils die als Hebel 84 ausgebildeten Einstelleinrichtungen angeordnet. Dieser Hebel 84 ist jeweils schwenkbar an den Rohren 80 und 81 befestigt. Dieser Hebel 84 ist als kreisförmige Scheibe ausgebildet, wobei sich der Befestigungspunkt des Hebels 84 an den Rohren 80 und 81 außerhalb des Mittelpunktes des kreisförmigen Hebels befindet. Der Hebel 84 stützt sich auf den Innenseiten 85 des Schargehäuses 73 ab. Die Abstützflächen 86 des Hebels 84 weisen jeweils einen Abstand zu dem Schwenkpunkt 87 des Hebels 84 auf. Zwischen dem Hebel 84 und den Rohren 80 und 81 sind jeweils nicht dargestellte Rasten vorgesehen, so daß der Hebel in der eingestellten Position arretiert wird.

An dem Hebel 84 ist ein einstückig mit dem Hebel 84 verbundener Stift 88 angeordnet, über den der Hebel 84 verschwenkt werden kann. Durch Verschwenken des Hebels 84 über den Stift 88 können die Rohre 80 und 81 entweder zu der einen Seite oder zu der anderen Seite in dem Schargehäuse 73 verschwenkt werden, so daß das dem Rohr 80 zugeleitete Saatgut entweder ganz oder vollständig jeweils dem Zuführungsschacht 78 und 79 und somit den Ausläufen 18 oder 19 entsprechend zugeleitet werden.

Hierbei ist der Hebel 84 und der Stift 88 so an den angeordnet und die Zuführungsschäche 78 und 79 sind so mit den Ausläufen 18 und 19 verbunden, daß der Stift 88 anzeigt, wie das jeweilige Gut in der Säfurche abgelegt wird. Ist der Hebel 84 so eingestellt, daß der Stift 88 sich in der oberen Position befindet, so bedeutet dieses, daß das Gut, welches diesem Rohr, dem der Stift 88 zugeordnet ist, oben in der Säfurche abgelegt wird. Ist der Hebel 84 jedoch so verschwenkt, daß der Stift 88 sich in der unteren Position befindet, so bedeutet dieses, daß das Gut, welches dem Rohr, dem dieser Stift 88 zugeordnet ist, unten in der Säfurche abgelegt wird.

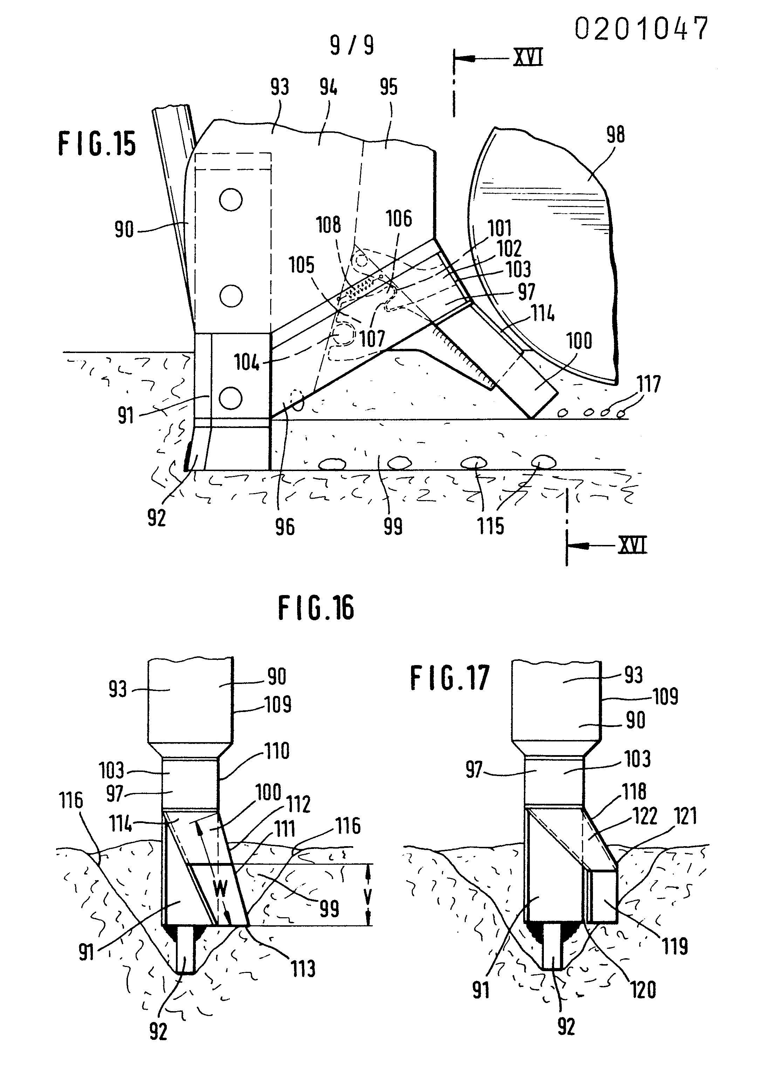

Das Säschar 90 gemäß Fig. 15 weist auf seiner der Fahrtrichtung zugewandten Seite den Aufreißkörper 91 mit der Aufreißspitze 92 auf. Innerhalb des Scharkörpers 93 des Säschares 90 sind die getrennten Führungen 94 und 95 angeordnet. Die Führung 94 endet in dem vorderen Auslauf 96 des Säschares 90, während die Führung 95 in dem hinteren Auslauf 97 ausmündet. Hinter dem Säschar 90 ist die Druckrolle 98 angeordnet. von dem Aufreißkörper 91 und der Aufreißspitze 92 wird die Säfurche 99 in den Boden gerissen.

In dem Bereich des hinteren Auslaufes 97 ist an dem Säschar ein nach unten in die Säfurche 99 ragendes Verlängerungsstück 100 des hinteren Auslaufes 97 abnehmbar angeordnet. Das Verlängerungsstück 100 ist mittels des Schnellverschlusses 101 an dem Säschar 90

0201047

befestigt. Der Schnellverschluß 101 ist als Schnappverschluß ausgebildet, wobei der Betätigungshebel 102 des Schnappverschlusses 101 der untere hintere Teil 103 des Schargehäuses 93 ist. Der Schnappverschluß 101 ist möglichst hoch im unteren Bereich des Schargehäuses 93 angeordnet, um so möglichst viel Freiraum zwischen dem vorderen Auslauf 96 und dem hinteren Auslauf 100 zu schaffen, damit es zu keinen Verstopfungen des vorderen Auslaufes 96 kommt. In dem Schargehäuse 93 ist der Bolzen 104 angeordnet. Auf diesen Bolzen 104 wird der vordere Teil des Haltestückes 105 des Schnappverschlusses 101 aufgeschoben. Der hintere Teil des Haltestückes 101, welches mit dem Verlängerungsstück 100 des hinteren Auslaufes verschweißt ist, weist den nasenförmigen Ansatz 106 sowie die Auskerbung 107 auf, in die das Ansatzstück des Betätigungshebels 102 mit der entsprechend korrespondierenden Form einfaßt. Dieser Hebel 102 ist in dem hinteren Teil des Schargehäuses verschweißt. Zwischen dem Hebel 102 und dem Schargehäuse 93 ist die Zugfeder 108 angeordnet, so daß der Hebel 102 gegen das Haltestück 105 des Verlängerungsstückes 100 gezogen wird. Das untere Ende des Verlängerungsstückes 100 überragt die Seitenwand 109 des Schargehäuses 93 sowie die Seitenwand 110 des Aufreißkörpers 91 des Säschares 90 einseitig seitlich. Das Verlängerungsstück 100 ist zu seiner einen Seite schräg nach außen gerichtet und mit seiner äußeren schrägen Seitenwand 111 überragt das Verlängerungsstück 100 das Schargehäuse 93 sowie den Aufreißkörper einseitig seitlich. Das Verlängerungsstück 100 weist zumindest im oberen Bereich etwa die Breite hinteren Auslaufes 97 auf. Die äußere schräge seitliche Seitenwand 112 des Verlängerungsstückes 100 endet in dem Abstand V von der Unterseite 113 des Verlängerungsstückes 100, der zumindest einem Drittel der Länge W des Verlängerungsstückes 100 entspricht. Auf der Rückseite des Verlängerungsstückes 100 ist eine Abdeckung 114 angeordnet, die sich etwa über die Hälfte der Länge W des Verlängerungsstückes erstreckt. Der untere Bereich des Verlängerungsstückes 100 befindet sich in Fahrtrichtung gesehen seitlich des vorderen Auslaufes 96.

Die Funktionsweise des hinteren Auslaufes 100 läßt sich folgendermaßen beschreiben:

Durch den Aufreißkörper 91 und der Aufreißspitze 92 des Säschares 90 wird die Säfurche 99 in den Boden gerissen. Durch den vorderen Auslauf 96 wird auf dem Grund der Säfurche direkt hinter der Scharspitze 92 das Saatgut 115 abgelegt. Durch das Reißen des Säschlitzes 99 in den Boden reißt der Boden entlang der Aufbruchlinien 116 auf. Der untere Bereich des hinteren Auslaufes 100 wird etwas der feste Boden seitlich der Aufbruchlinien 116 angekratzt. Durch den hinteren Auslauf 97 bzw. dem hinteren Verlängerungsstück 100 werden Düngemittel 117 seitlich und oberhalb des Saatgutes in der Säfurche 99 abgelegt. Anschließend wird der Boden in der Säfurche mit dem abgelegten Saatgut 115 und den Düngemitteln 117 durch die Druckrolle 98 angedrückt

Das Verlängerungsstück 118 gemäß Fig. 17 unterscheidet sich in seiner Ausgestaltung von dem Verlängerungsstück 100 gemäß der Fig. 16. Das Verlängerungsstück 118 ist ebenfalls unter dem hinteren Auslauf 97 angeordnet, so daß es eine Verlängerung des hinteren Auslaufes 97 bildet. Das untere Ende 119 des Verlängerungsstückes 118 befindet sich seitlich der Seitenwand 109 des Schargehäuses 99 des Säschares 90 bzw. seitlich der Seitenwand 120 des Aufreißkörpers 91, so daß das untere Ende 119 des Verlängerungsstückes 100 sowohl das Schargehäuse 93 wie auch den Aufreißkörper 91 einseitig seitlich überragt. Dieser Aufreißkörper 118 ist ebenfalls mit Hilfe des Schnellverschlusses 101 an dem Säschar 90 befestigt. Die äußere seitliche Seitenwand 121 des Verlängerungsstückes 118 endet ebenfalls in einem Abstand von der Unterseite des Verlängerungsstückes der etwa der halben Länge des Verlängerungsstückes 118 entspricht. Weiterhin weist das Verlängerungsstück 118 auf seiner Rückseite die Abdeckung 122 auf, die sich über die Hälfte der Länge des Verlängerungsstückes erstreckt.

Amazonen-Werke

H. Dreyer GmbH & Co. KG

Am Amazonenwerk 9 - 13

4507 Hasbergen-Gaste

**ANR 1 000 667**

P a t e n t a n s p r ü c h e

1.

Drillmaschine, die einen Rahmen, Vorratsbehälter,
Säschare mit zumindest zwei getrennten Ein- und Ausläufen
für zwei verschiedene Materialien und jeweils hinter den
Säscharen angeordnete Tiefenführungs- bzw. Druckrollen
aufweist, dadruch gekennzeichnet, daß bei der hinter dem
Säschar (1) angeordneten Rolle (7,28,31) auf ihrem Umfang
(22) in Abständen jeweils zueinander angeordnete
Druckelemente (23,25,29,33) angeordnet sind, wobei sich
zwischen den Druckelementen (23,25,29,33) jeweils ein
Freiraum (24) befindet.

2.

Drillmaschine, die einen Rahmen, Vorratsbehälter,
Säschare mit zumindest zwei getrennten Ein- und Ausläufen
für zwei verschiedene Materialien und jeweils hinter den
Säscharen angeordnete Tiefenführungs- und Druckrollen
aufweist, wobei das erste Material dem vorderen Auslauf
und das andere Materil dem hinteren Auslauf über
getrennte Führungen innerhalb der Säschare jeweils in
einstellbaren Mengen zum Einbringen in den Boden
zugeführt werden, wobei die Ausläufe in Fahrtrichtung
gesehen einen Abstand zueinander aufweisen, dadurch
gekennzeichnet, daß bei der hinter dem Säschar (1)
angeordneten Rolle (7,28,31) auf ihrem Umfang (22)
in Abständen jeweils zueinander angeordnet Druckelemente (23,25,29,33) angeordnet sind, wobei sich zwischen den Druckelementen (23,25,29,33) jeweils einen Freiraum (24) befindet.

3.
Drillmaschine mit in aufrechter Ebene bewegbaren Säscharen, hinter denen jeweils eine Tiefenführungs- bzw. Druckrolle angeordnet ist, dadurch gekennzeichnet, daß bei der hinter dem Säschar (1) angeordneten Rolle (7,28,31) auf ihrem Umfang (22) in Abständen jeweils zueinander angeordnete Druckelemente (23,25,29,33) angeordnet sind, wobei sich zwischen den Druckelementen (23,25,29,33) jeweils ein Freiraum (24) befindet.

4.
Drillmaschine für das Direktsaatverfahren (Zero-tillage) zum Ausbringen von Saatgut und Düngemittel, die einen Rahmen, Vorratsbehälter, als Meißelsäschare ausgebildete Säschare mit zumindest zwei getrennten Ein- und Ausläufen für Saatgut und Düngemittel und jeweils hinter den Säscharen angeordnete Tiefenführungs- bzw. Druckrollen aufweist, wobei die auszubringenden Güter über getrennte Führungen innerhalb der Säschare jweils getrennt dem jeweiligen Auslauf in einstellbaren Mengen zum Einbringen in den Boden zugeführt werden, wobei die Ausläufe in Fahrtrichtung gesehen einen Abstand zueinander aufweisen, wobei die Säschare über parallelogrammartie Halterungen mit dem Rahmen verbunden und mit Hilfe einer Einstellvorrichtung in ihrer Eindringtiefe in den Boden einstellbar sind, dadurch gekennzeichnet, daß bei der hinter dem Säschar (1) angeordneten Rolle (7,28,31) auf ihrem Umfang (22) in Abständen jeweils zueinander angeordnete Druckelemente (23,25,29,33) angeordnet sind, wobei sich zumindest den Druckelementen (23,25,29,33) jeweils ein Freiraum (24) befindet.

5.

Drillmaschine nach einem der Ansprüche 1 bis 4, dadurch gekennzeichnet, daß die Druckelemente (23) als auf einem Tragring (26) der Rolle (7) angeordnete schmale Druckbleche (25) ausgebildet sind.

6.

Drillmaschine nach Anspruch 5, dadurch gekennzeichnet, daß die Druckbleche (25) so angeordnet sind, daß ihre Längsseite quer zur Fahrtrichtung (15) weist.

7.

Drillmaschine nach Anspruch 5 oder 6, dadurch gekennzeichnet, daß die Druckelemente (25) zumindest einen ähnlichen Querschnitt wie die Säfurche aufweisen.

8.

Drillmaschine nach einem der Ansprüche 1 bis 4, dadurch gekennzeichnet, daß die Druckelemente (23) als eine Spindel (29) ausgebildet sind, die um den runden Tragrin (30) der Rolle (28) gelegt ist.

9.

Drillmaschine nach Anspruch 8, dadurch gekennzeichnet, daß die Spirale (29) endlos um den Tragring (30) der Rolle (28) gewickelt ist.

10.

Drillmaschine nach Anspruch 8, dadurch gekennzeichnet, daß die als Spirale (29,33) ausgebildeten Druckelemente (23) auf dem Tragring (30,32) der Rolle (28,31) befestigt sind.

11.

Drillmaschine nach Anspruch 8, dadurch gekennzeichnet, daß drei Spiralen (33) dreieckförmig auf dem Tragrahmen (33) angeordnet sind.

0201047

12.
Drillmaschine, die einen Rahmen, Vorratsbehälter, Säschare mit zumindest zwei getrennten Ein- und Ausläufen für zwei verschiedene Materialien und jeweils hinter den Säscharen angeordnete Tiefenführungs- bzw. Druckrollen aufweist, wobei bei den hinter dem Säschar angeordneten Rollen auf ihrem Umfang in Abständen jeweils zueinander angeordnete Druckelemente angeordnet sind, zwischen denen sich jeweils ein Freiraum befindet, insbesondere nach Anspruch 1, dadurch gekennzeichnet, daß die Druckelemente (41) in ihrem Außenbereich eine hufeisenförmige Form aufweisen.

13.
Drillmaschine nach Anspruch 12, dadurch gekennzeichnet, daß die seitlichen Außenflächen (47) sehr steil von außen nach innen auf die Drehachse zulaufen.

14.
Drillmaschine nach Anspruch 13, dadurch gekennzeichnet, daß die seitlichen Außenflächen (47) fast parallel zueinander verlaufen.

15.
Drillmaschine nach Anspruch 12, dadurch gekennzeichnet, daß die einzelnen Druckelemente (41) von hufeneisen- bzw. U-förmig gebogenen Rundstäben (48) gebildet werden.

16.
Druckrolle, die jeweils hinter einem Säschar, insbesondere einer als Direktsaatmaschine ausgebildeten Sämaschine, angeordnet ist, das jeweils eine Säfurche in den Boden reißt, in der Saatgut und/oder Düngemittel abgelegt werden und der Boden in der Säfurche von der Druckrolle angedrückt wird, insbesondere nach Anspruch 1, dadurch gekennzeichnet, daß die Druckrolle (7) gegenüber dem Säschar (51) seitlich gegen eine Federkraft ausweichbar angeordnet ist.

17.

Druckrolle nach Anspruch 16, wobei die Druckrolle an einem Haltearm angeordnet ist, dadurch gekennzeichnet, daß der Haltearm (59) gegen die Federkraft seitlich ausweichbar angeordnet ist.

18.

Druckrolle nach Anspruch 16, wobei die Druckrolle an einem an dem Säschar befestigten Haltearm angeordnet ist, dadurch gekennzeichnet, daß der Haltearm (59) an dem Säschar (51) gegen die Federkraft seitliche ausweichbar angeordnet ist.

19.

Druckrolle nach Anspruch 16 oder 18, dadurch gekennzeichnet, daß der Haltearm (59) an seiner Oberseite zur Befestigung an dem Säschar (51) einen etwa rechtwinklig abgewinkelten Befestigungsteil (60) aufweist, daß in dem Bereich der Befestigungsstelle zumindest eine Feder (70) angeordnet ist, die den Haltearm (59) in die Normalposition drückt bzw. hält.

20.

Druckrolle nach Anspruch 19, dadurch gekennzeichnet, daß in dem Bereich der Befestigungsstelle an dem Säschar (51) eine Platte (66) angeordnet ist, die die Feder (70) gegen eine an dem Säschar (59) sich befindliche Auflagefläche (65) zieht bzw. drückt, und daß das Befestigungsteil (60,62) gegen diese Platte (66) zur Anlage kommt.

21.

Druckrolle nach Anspruch 20, dadurch gekennzeichnet, daß das Befestigungsteil (60) dreipunktförmige Anlageflächen aufweist.

6

22.

Druckrolle nach Anspruch 21, dadurch gekennzeichnet, daß das Befestigungsteil (60) T-förmig ausgebildet ist, wobei der Mittelsteg (61) des T-förmigen Teiles zumindest in seinem Befestigungsbereich an dem Säschar (51) rund ausgebildet ist und in einer an dem Säschar (51) angeordneten Lagerbuchse (63) faßt, während der obere Steg (62) des T-förmigen Teiles zwischen der Platte (66) und den sich an dem Säschar befindlichen Auflageflächen (65) aufliegt.

23.

Druckrolle nach Anspruch 16, dadurch gekennzeichnet, daß die Kraft der Feder über an der Feder angeordnete Einstellelemente veränderbar ist.

24.

Sämaschine mit Säscharen, die getrennte Ein- bzw. Ausläufe für verschiedene Auszubringende Materialien, wie Saatgut und Düngemittel, aufweisen, wobei die verschiedenen Materialien jeweils den Ein- bzw. Ausläufen des jeweiligen Säschares aus dem Vorratsbehälter der Sämaschine über Zuleitungsschläuche zuführbar sind, wobei zwischen dem Vorratsbehälter und den Ausläufen der Säschare Leitvorrichtungen, vorzugsweise innerhalb der Säschare, zum Umstellen der Materialzuführung zu den einzelnen Ausläufen der Säschare angeordnet sind, so daß die verschiedenen Materialien wahlweise dem einen oder dem anderen Auslauf des jeweiligen Säschares ganz oder teilweise zuführbar sind, insbesondere nach Anspruch 1, dadurch gekennzeichnet, daß die Leitvorrichtung (74) als die Enden der Zuleitungsschläuche (56,57) ausgebildet sind, die über eine Einstellvorrichtung (75) hin- und herbewegbar sind und in zumindest zwei Positionen einstellbar sind.

25.

Sämaschine nach Anspruch 24, dadurch gekennzeichnet, daß den Enden der Zuleitungsschläuche (56,57) Rohre (80,81) zugeordnet sind, die innerhalb des jeweiligen Säschares (51) über die Einstelleinrichtung (75,76) einstellbar sind.

26.

Sämaschine nach Anspruch 24 oder 25, dadurch gekennzeichnet, daß die Einstelleinrichtung (75,76) als schwenkbar an den Rohren (80,81) angeordneter Hebel (84) ausgebildet ist, der sich an den Innenseiten (85) des Schargehäuses (73) abstützt, wobei die Abstützflächen (86) des Hebels (84) einen Abstand zu dem Schwenkpunkt (87) des Hebels (84) aufweisen.

27.

Sämaschine nach Anspruch 24, dadurch gekennzeichnet, daß die Einstellvorrichtung als mit Rasten versehener Hebel ausgebildet ist.

28.

Sämaschine nach Anspruch 24, dadurch gekennzeichnet, daß innerhalb des Schargehäuses Klemmführungen mit Raststellungen für die verschiedenen Stellungen der Rohre vorgesehen sind.

29.

Sämaschine nach Anspruch 26, dadurch gekennzeichnet, daß der Hebel (88) aus dem Schargehäuse (73) herausragt und als Anzeigeelement ausgebildet ist.

30.

Drillmaschine mit einem Rahmen, Vorratsbehälter, Säscharen und zumindest zwei getrennten Ein- und Ausläufen für zwei verschiedene Materialien und jeweils hinter den Säscharen angeordnete Tiefenführungs- bzw. Druckrollen, wobei das eine Material dem vorderen Auslauf und das andere Material dem hinteren Auslauf über getrennte Führungen innerhalb der Säschare jeweils in einstellbaren Mengen zum Einbringen in den Boden zugeführt werden, wobei die Ausläufe in Fahrtrichtung gesehen einen Abstand zueinander aufweisen und wobei jeweils auf der der Fahrtrichtung zugewandten Seite des Säschares ein schmaler Aufreißkörper zum Aufreißen des Bodens und zum Ziehen einer Säfurche angeordnet ist, insbesondere nach Anspruch 1, dadurch gekennzeichnet, daß in dem Bereich des hinteren Auslaufes (97) des jeweiligen Säschares (90) jeweils ein nach unten in die Säfurche (99) ragen des und abnehmbar an dem Säschar (90) angeordnetes Verlängerungsstück (100,118) des hinteren Auslaufes (97) vorgesehen ist, und daß das untere Ende des Verlängerungsstückes (100,118) zumindest teilweise die Seitenwand (109) des Schargehäuses (93) bzw. den Aufreißkörper (91) einseitig seitlich überragt.

31.
Drillmaschine, nach Anspruch 30, dadurch gekennzeichnet, daß das Verlängerungsstück (100) zu seiner einen Seite schräg nach außen gerichtet ist und mit seiner äußeren schrägen Seitenwand (111) des Sägehäuses (93) bzw. den Aufreißkörper (91) einseitig seitlich überragt.

32.
Drillmaschine nach Anspruch 30, dadurch gekennzeichnet, daß das Verlängerungsstück (100) zumindest etwa die Breite des hinteren Auslaufes (97) in dem Säschargehäuse (93) aufweist.

33.
Drillmaschine nach Anspruch 31, dadurch gekennzeichnet, daß die äußere schräge seitliche Seitenwand (111,121) des Verlängerungsstückes (100,118) zumindest etwa in einem Abstand (V) von der Unterseite (113) des Verlängerungsstückes (100) endet, der zumindest einem Drittel der Länge (W) des Verlängerungsstückes (100) entspricht.

34.
Drillmaschine nach Anspruch 32 und/oder 33, dadurch gekennzeichnet, daß das Verlängerungsstück (100,118) auf seiner Rückseite eine Abdeckung (114,122) aufweist, die sich etwa über die Hälfte der Länge (W) des Verlängerungsstückes (100) erstreckt.

35.
Drillmaschine nach Anspruch 30, dadurch gekennzeichnet, daß sich der untere Bereich des Verlängerungsstückes (100) in Fahrtrichtung gesehen zumindest im wesentlichen seitlich des vorderen Auslaufes (96) befindet.

36.
Drillmaschine nach Anspruch 30, dadurch gekennzeichnet, daß das Verlängerungsstück (100,118) mittels eines Schnellverschlusses (101) an dem jeweiligen Säschar (90) zu befestigen ist.

37.
Drillmaschine nach Anspruch 36, dadurch gekennzeichnet, daß der Schnellverschluß (101) als Schnappverschluß ausgebildet ist, daß der Betätigungshebel (102) des Schnappverschlusses der untere hintere Teil (103) des Schargehäuses (93) ist.

38.
Drillmaschine nach Anspruch 37, dadurch gekennzeichnet, daß der Schnappverschluß (101) möglichst hoch im unteren Bereich des Schargehäuses (93) angeordnet ist.

39.

Drillmaschine nach Anspruch 36 und 37, dadurch gekennzeichnet, daß in dem Schargehäuse ein Bolzen (104) angeordnet ist, daß auf diesen Bolzen (104) der vordere Teil des Haltestückes (105) des Schnappverschlusses (101) aufgeschoben wird, daß der hintere Teil des Haltestückes (105) einen nasenförmigen Ansatz (106) bzw. eine Auskerbung (107) aufweist, in den bzw. die ein bewegbarer federbelasteter Hebel (102) mit einer entsprechend korrespondierenden Form einfaßt, welcher mit dem hinteren Bereich des Schargehäuses (93) verbunden ist.

# FIG.1

FIG. 2

FIG. 3

FIG.4

23

29

30

28

FIG.5

VI

33

FIG.6

33

32

31

31

32

# FIG.7

0201047

FIG. 8

FIG. 9

FIG. 10

0201047

FIG.11

FIG.12

0201047

# FIG. 13

# FIG.14

0201047

FIG.15

FIG.16

FIG.17